# EUROPÄISCHE PATENTANMELDUNG

(11) **EP 2 314 755 A1**
(43) Veröffentlichungstag der Anmeldung: **27.04.2011**
(21) Anmeldenummer: 10188571.3
(22) Anmeldetag: 22.10.2010
(51) Int. Cl.: D06F 39/12, A47B 77/02, A47L 15/42

(54) **Hausgerät mit einer Deckplatte**

(30) Priorität: 26.10.2009 ES 200930573
(71) Anmelder: BSH Bosch und Siemens Hausgeräte GmbH, 81739 München (DE)
(72) Erfinder: Cortes Perez, Elena, 50014 Zaragoza (ES); Lopez Palacios, Carlos, 50008 Zaragoza (ES); Pina Poves, Jose Luis, 50005 Zaragoza (ES); Romeo Carnicero, Alberto, 50012 Zaragoza (ES)

(57) **Zusammenfassung**

Die Erfindung betrifft ein Hausgerät, insbesondere eine Waschmaschine oder einen Waschtrockner, mit einem Gehäuse 4 und einer das Gehäuse 4 abdeckenden Deckplatte 2. Dabei besteht ein einen Hauptanteil einer Deckelfläche der Deckplatte 2 bildendes Plattenelement 6 aus Metallblech 8, welches von einem in einem einzigen Kunststoffspritz-Vorgang an einen Randbereich des Metallblechs 8 angeformten einstückigen Kunststoffrahmen 10 umgeben ist.

## Beschreibung

Die vorliegende Erfindung betrifft ein Hausgerät, insbesondere Waschmaschine oder eines Waschtrockner, mit einem Gehäuse und einer das Gehäuse abdeckenden Deckplatte.

Die bekannten Deckplatten von Hausgeräten, insbesondere Waschmaschinen oder Waschtrocknern, besitzen ein Plattenelement aus Kunststoff oder mit Kunststoff, insbesondere Melaminharz, beschichtetem Pressholz und einen Kunststoffrahmen, der das Plattenelement an seinen Rändern umschließt. Der Kunststoffrahmen ist als getrenntes Element hergestellt und dann mittels eines Klebemittels, wie zum Beispiel Silikon, mit dem Plattenelement verbunden. Diese Befestigung ist problematisch, insbesondere im Falle unterschiedlicher gepaarter Materialien des Plattenelements und des Kunststoffrahmens. Zum Befestigen am Hausgerät weist diese Art von Deckplatte Befestigungselemente auf, mit denen die Deckplatte an einem Gehäuse des Hausgeräts befestigt wird. Auch diese Befestigungselemente sind gewöhnlich als getrennte Kunststoffteile hergestellt, die am Plattenelement positioniert und befestigt werden müssen.

Diese Art von Deckplatte ist daher sowohl bei der Konstruktion als auch bei der Herstellung sehr kompliziert auszuführen und kostspielig.

Die Erfindung beruht auf der Aufgabe oder auch dem technischen Problem, ein Elektro-Hausgerät, insbesondere eine Waschmaschine oder einen Waschtrockner, mit einer verbesserten Deckplatte zu schaffen, welche Deckplatte und welches Hausgerät möglichst mehrheitlich die dem Stand der Technik innewohnenden Nachteile vermeidet und außerdem leichter und effektiver herzustellen ist.

Diese Aufgabe ist gemäß einem ersten Aspekt mittels eines Hausgeräts mit einer Deckplatte gemäß den Merkmalen des unabhängigen Patentanspruchs gelöst. Bevorzugte und vorteilhafte Ausführungseigenschaften des Hausgeräts gemäß der Erfindung sind Gegenstände der abhängigen zugeordneten Patentansprüche sowie der nachfolgenden Beschreibung und der beigefügten Zeichnung.

Bei dem erfindungsgemäßen Hausgerät, insbesondere Waschmaschine oder eines Waschtrockner, mit einem Gehäuse und einer das Gehäuse abdeckenden Deckplatte, besteht ein einen Hauptanteil einer Deckelfläche der Deckplatte bildendes Plattenelement aus Metallblech, welches von einem in einem einzigen Kunststoffspritz-Vorgang an einen Randbereich des Metallblechs angeformten einstückigen Kunststoffrahmen umgeben ist.

Die Deckplatte des Hausgeräts, insbesondere einer Waschmaschine oder eines Waschtrockners, ist erfindungsgemäß mit einem Plattenelement aus Metallblech, das den Hauptteil einer Deckelfläche des Deckplattes bildet, sowie mit einem einstückig an einen Randbereich des Metallblechs, insbesondere durch Rotationsguss, in einem einzigen Gussvorgang durch Kunststoffspritzen angegossenen Kunststoffrahmen versehen (d. h. "in einem Zug").

Unter dem Begriff "Rahmen" im Sinne der Erfindung ist sowohl ein in sich geschlossener Rahmen mit zum Beispiel vier Rahmenseiten zu verstehen als auch ein offener Rahmen mit zum Beispiel nur drei Rahmenseiten oder eine Anordnung nach Art eines Rahmens mit zum Beispiel zwei einander gegenüberliegenden leistenartigen Kunststoffelementen.

Die Deckplatte des Hausgeräts gemäß der Erfindung besitzt eine vergleichsweise einfache Konstruktion und kann auf einfache und effektive Weise in einer Arbeitsphase hergestellt werden, da der Kunststoffrahmen in einem einzigen Stück gegossen wird und in einem Gussvorgang durch Kunststoffspritzguss an das Metallblech angeformt wird. Dies kann zum Beispiel in einer Spritzgussform erfolgen, in die das Metallblech gelegt und dann durch Extrusion überzogen wird. Außerdem ist das Metallblech, welches das Plattenelement bildet, ein kostengünstiges und leicht in eine gewünschte Form zu bringendes Material, das sich außerdem sehr gut mit Kunststoff verbinden lässt. So ist auf einfache Weise eine feste und wasserdichte Verbindung zwischen dem Metallblech und dem gegossenen Kunststoffrahmen herzustellen. Im Falle der Deckplatte gemäß der Erfindung lassen sich zusätzlich gleichzeitig an dem Kunststoffrahmen und/oder dem Metallblech angeformte Befestigungselemente gestalten, wie im Folgenden noch genauer beschrieben wird. Getrennte Befestigungselemente, die auf besondere Weise getrennt hergestellt, positioniert und befestigt werden müssen, sind daher nicht notwendig. Die Konstruktion und die Herstellung der Deckplatte gemäß der Erfindung sind daher noch mehr vereinfacht und rationalisiert.

Bezugszeichen in den Patentansprüchen, der Beschreibung und der Zeichnung dienen nur zum besseren Verständnis der Erfindung und vorliegender Beschreibung und sollen den Schutzumfang nicht einschränken.

Bevorzugte Ausführungsbeispiele der Erfindung mit zusätzlichen Ausführungseinzelheiten und anderen Vorteilen sind im Folgenden mit Bezug auf die beigefügte Zeichnung genauer beschrieben und erläutert. Es zeigen:
- Fig. 1: eine schematische perspektivische Explosionsansicht eines wesentlichen Teils eines Gehäuses oder auch eines Gestells einer Waschmaschine mit einer Deckplatte nach einer ersten Ausführungsform;
- Fig. 2: eine schematische Schnittansicht entlang der Linie II-II in Fig. 1;
- Fig. 3: eine schematische Draufsicht eines Teilbereichs des Gehäuses der Fig. 1 in Blickrichtung gemäß dem Pfeil III in Fig. 1;
- Fig. 4: eine schematische Schnittansicht entlang der Linie IV-IV in Fig. 1;
- Fig. 5: eine schematische Querschnittsansicht über einen Randbereich einer Deckplatte eines Hausgeräts nach einer zweiten Ausführungsform; und
- Fig. 6: eine schematische perspektivische Ansicht eines Teilbereichs der Deckplatte von Fig. 5 im Falle ihrer Befestigung an einem Gehäuse einer Waschmaschine.

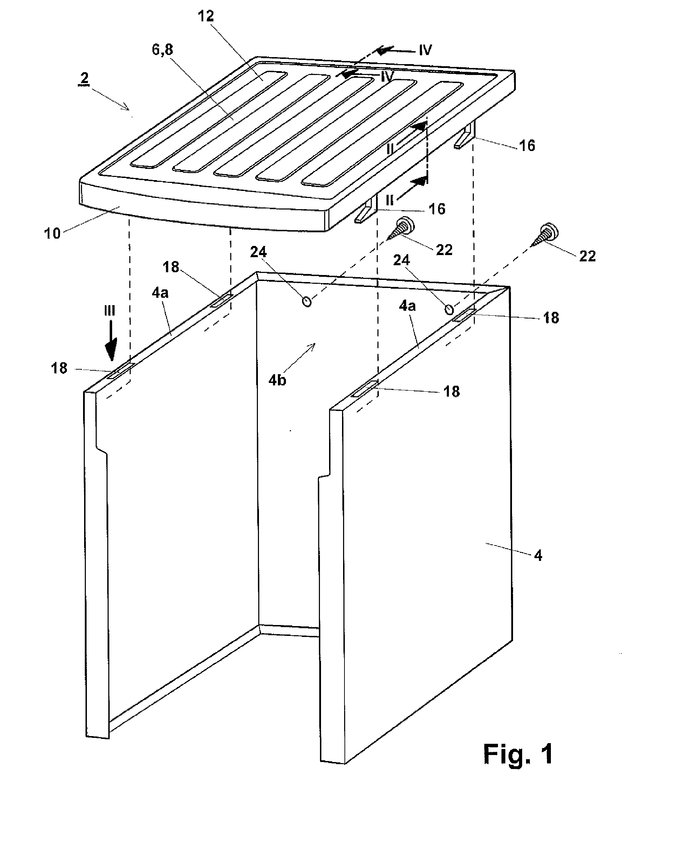

Die in der Fig. 1 gezeigte Deckplatte 2 eines Hausgeräts nach einer ersten Ausführungsform ist als Bauteil einer Waschmaschine vorgesehen, von der in der Zeichnung ein Gehäuse 4 aus Metallblech dargestellt ist, an dem die Deckplatte 2 befestigt ist. Die Deckplatte 2 ist mit einem Element in der Art einer Platte 6 aus Metallblech 8, das einen Hauptteil der Deckelfläche der Deckplatte 2 bildet, sowie mit einem einstückig an einen Randbereich des Metallblechs 8 in einem einzigen Gussvorgang im Rotationsguss durch Kunststoffspritzen angeformten Kunststoffrahmen 10 versehen. Der Kunststoffrahmen 10 ist aus einem ABS-Kunststoff gefertigt. Es können natürlich auch andere Kunststoffarten verwendet werden. Das Metallblech 8 besitzt eine Dicke, die vorzugsweise in einem Bereich von 0,5 mm bis 2 mm, insbesondere 0,65 mm bis 1,5 mm, insbesondere 0,7 mm bis 1,2 mm liegt. Im vorliegenden Beispiel beträgt die Dicke ungefähr 0,8 mm.

Das Metallblech 8 kann leicht bauchig sein, in zwei oder drei Dimensionen, insbesondere in einem Bereich, der sich jeweils zwischen zwei gegenüberliegenden Seitenrändern des Bleches 8 befindet, um die Druckfestigkeit und Steifigkeit des Metallblechs 8 zu erhöhen und ein Einbeulen des Bleches zu verhindern, wenn Gegenstände auf die Deckplatte 2 gelegt werden. In dem Ausführungsbeispiel gemäß Fig. 1 ist das Metallblech 8 im Flächenbereich der Deckplatte 2 mit angeformten Versteifungen, zum Beispiel in Form von Ausbauchungen 12, Konkavitäten, Rillen oder Ähnlichen versehen, die eine vergleichbare Wirkung erreichen.

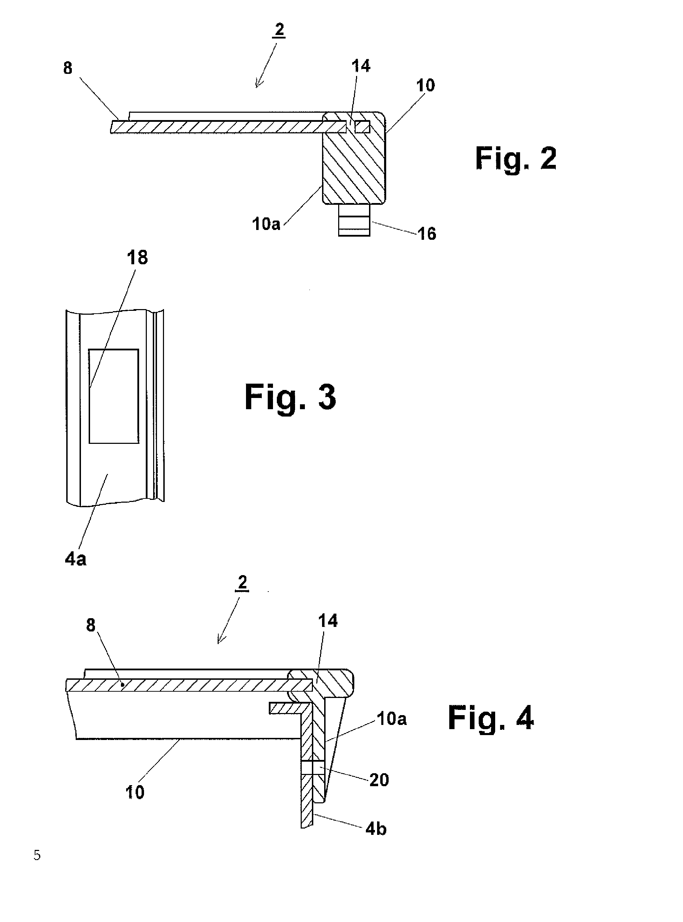

Wie in der Fig. 2 skizziert, die eine schematische Schnittansicht entlang der Linie II-II in Fig. 1 zeigt, umschließt der einstückige Kunststoffrahmen 10 den freien Rand des Metallblechs 8. An diesem Randbereich können sich optional Verzahnungselemente befinden, zum Beispiel in Form von Durchgangsöffnungen 14, in die der Kunststoff während des Spritzgussvorgangs eindringend oder hindurchgehend fließt, sodass sich danach im ausgehärteten Zustand des Kunststoffrahmens 10 Bereiche davon formschlüssig in den Verzahnungselementen verbinden und den Kunststoffrahmen unverlierbar an dem Metallblech 8 befestigen. Anstelle von Durchgangsöffnungen 14 können zum Beispiel auch Vertiefungen oder Vorsprünge oder aufgeraute Metallbereiche verwendet werden.

Wie überdies aus der Fig. 2 hervorgeht, ist der untere Randbereich 10a des Kunststoffrahmens 10 als eine Art Leiste gestaltet, die auf einen oberen Rand 4a des Gehäuses 4 gesetzt werden kann (siehe Fig. 1) und mit diesem verbindbar ist. Dazu besitzen die unteren Ränder des Kunststoffrahmens 10 jeweils an zwei gegenüberliegenden Seiten Befestigungselemente 16, die einstückig gestaltet und in einem Spritzgussvorgang zusammen mit dem Aufbau des Rahmens hergestellt sind. Diese Befestigungselemente 16 sind im vorliegenden Fall in Form von Haken gestaltet. Diese können optional mit Einpass- und/oder Rastelementen versehen sein.

Fig. 3 zeigt eine schematische Ansicht von oben eines Teilbereichs des Gehäuses 4 der Fig. 1 in Blickrichtung gemäß dem Pfeil III in Fig. 1. Im Falle dieses Teilbereichs handelt es sich um einen Bereich um den oberen Rand 4a. Wie in Fig. 3 und auch in Fig. 1 zu erkennen ist, besitzt der obere Rand Aussparungen 18, in die von oben jeweils ein hakenförmiges Befestigungselement 16 einsetzbar ist. Mittels der Bewegung der Deckplatte 2 im Wesentlichen in einer Richtung parallel bezüglich der Längsausdehnung des oberen Randes 4a kann dann das hakenförmige Befestigungselement 16 am oberen Rand 4a formschlüssig befestigt werden.

Wie in der Fig. 4 skizziert, die eine schematische Schnittansicht entlang der Linie IV-IV in Fig. 1 zeigt, besitzt der Kunststoffrahmen 10 an seiner hinteren Seite ein Querschnittsprofil, das eine Rippe 10a aufweist, die während der Montage der Deckplatte 2 an dem Gehäuse 4 an einer Rückwand 4b des Gehäuses 4 angebracht werden kann. Die Rippe 10a weist ein oder mehrere Durchgangslöcher 20 auf, durch die zum Beispiel eine Schraube 22 (siehe Fig. 1) gesteckt werden kann, die durch sie hindurch geht und an das Gehäuse 4 an eine vorgesehene Schraubenaufnahme 24 (siehe Fig. 1) geschraubt werden kann. Mittels dieser Verschraubung und der hakenförmigen Befestigungselemente 16 ist dann die Deckplatte 2 zuverlässig und sicher an dem Gehäuse 4 befestigt. Diese Montage ist äußerst einfach und schnell ausführbar.

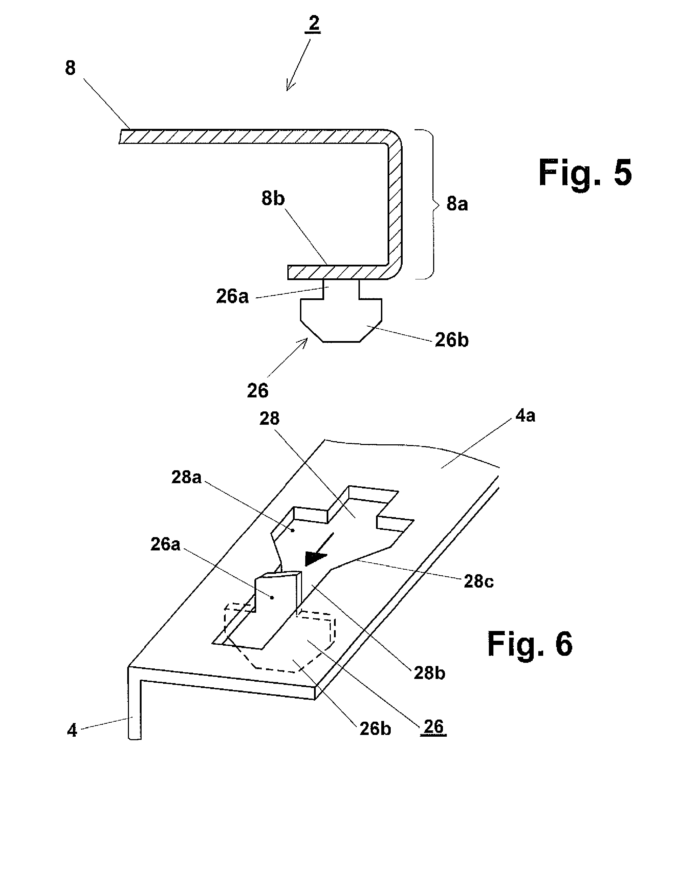

In Fig. 5 ist eine schematische Querschnittsansicht über einen Randbereich einer Deckplatte 2 nach einer zweiten Ausführungsform dargestellt. Im Falle dieser Variante ist der Randbereich des Metallblechs 8 an zwei einander gegenüberliegenden Seiten L-förmig umgebogen. Die Unterseite 8b dieses umgebogenen Bereichs 8a dient als Kontaktfläche, die auf den oberen Rand 4a des Gehäuses 4 gelegt und daran befestigt werden kann. Im umgebogenen Bereich 8a ist in diesem Beispiel kein Material des Kunststoffrahmens 10 vorgesehen. Grundsätzlich ist es natürlich möglich, und es ist auch gemäß der Erfindung vorgesehen, dass Teilbereiche des gegossenen Kunststoffrahmens 10 am umgebogenen Randbereich 8a des Metallblechs anliegen, insbesondere diesen umgreifen.

Wie außerdem in Fig. 5 dargestellt, sind die Bereiche des Metallblechs 8, genauer gesagt, die Bereiche der Unterseite 8b, als angeformte Befestigungselemente zur Befestigung der Deckplatte 2 am Gehäuse 4 gestaltet. Im Falle dieser angeformten Befestigungselemente handelt es sich in diesem Fall um Blechlaschen 26 in T-Form oder Hammerkopfform mit dünnem Ansatz 26a und erweitertem Kopf 26b. Diese Blechlaschen 26, die als einfache Laschen oder mehrfache Laschen gestaltet sein können, sind aus dem Material des Seitenblechs 8b herausgefalzt und in die in Fig. 6 gezeigte Position gebogen. Ihre Anordnung und Funktion entsprechen damit weitgehend denjenigen der zuvor bei der ersten Ausführungsform beschriebenen hakenförmigen Befestigungselemente 16.

Figur 6 zeigt eine schematische perspektivische Ansicht einer Blechlasche 26 der Deckplatte 2 oder auch ihres Metallblechs 8, die an einer Aussparung 28 am oberen Rand 4a des Gehäuses 4 befestigt ist. Die Aussparung 28 besitzt einen breiten Aufnahmebereich 28a und einen verbreiterten und engen Aufnahmebereich 28b. Für die Montage der Deckplatte 2 wird diese zuerst von oben mit ihrer jeweiligen Blechlasche 26 in den breiten Aufnahmebereich 28a eingesteckt. Mittels Verschieben der Deckplatte 2 in einer im Wesentlichen parallelen Richtung (siehe Pfeil in Fig. 6) zum oberen Rand 4a gleitet der Ansatz 26a der Blechlasche 26, indem er über einen sich verengenden Zentrierbereich 28c geht, in den engen Aufnahmebereich 28b, während der breite Kopf 26b hinter den Rändern des engen Aufnahmebereichs 28b fasst und so eine formschlüssige Verbindung bildet. Die weitere Befestigung der Deckplatte 2 kann zum Beispiel auf dieselbe Weise geschehen, wie sie zuvor in Bezug auf die Fig. 4 beschrieben wurde.

### Bezugszeichenliste

- 2: Deckplatte
- 4: Gehäuse
- 4a: Oberer Rand
- 4b: Rückwand
- 6: Plattenelement
- 8: Metallblech
- 8a: Umgebogener Bereich
- 8b: Unterseite
- 10: Kunststoffrahmen
- 10a: Rippe
- 12: Ausbauchungen / Versteifungen
- 14: Durchgangsöffnungen
- 16: Hakenförmige Befestigungselemente
- 18: Aussparungen
- 20: Durchgangsloch/-löcher
- 22: Schraube(n)
- 24: Schraubenaufnahme(n)
- 26: Blechlaschen (angeformte Befestigungselemente)
- 26a: Ansatz
- 26b: Kopf
- 28: Aussparung
- 28a: Breiter Aufnahmebereich
- 28b: Enger Aufnahmebereich
- 28c: Zentrierbereich

## Patentansprüche

1. Hausgerät, insbesondere Waschmaschine oder eines Waschtrockner, mit einem Gehäuse (4) und einer das Gehäuse (4) abdeckenden Deckplatte (2), **gekennzeichnet durch** ein einen Hauptanteil einer Deckelfläche der Deckplatte (2) bildendes Plattenelement (6) aus Metallblech (8), welches von einem in einem einzigen Kunststoffspritz-Vorgang an einen Randbereich des Metallblechs (8) angeformten einstückigen Kunststoffrahmen (10) umgeben ist.

2. Hausgerät nach Anspruch 1, **dadurch gekennzeichnet, dass** das Metallblech (8) eine Dicke besitzt, die in einem Bereich von 0,5 mm bis 2 mm, insbesondere 0,65 mm bis 1,5 mm, insbesondere 0,7 mm bis 1,2 mm liegt, insbesondere eine Dicke, die 0,8 mm beträgt.

3. Hausgerät nach einem der vorigen Ansprüche, **dadurch gekennzeichnet, dass** ein Randbereich des Metallblechs (8) abgewinkelt (8a) ist, insbesondere an mindestens zwei Seiten, insbesondere an zwei einander gegenüberliegenden Seiten abgewinkelt ist.

4. Hausgerät nach Anspruch 3, **dadurch gekennzeichnet, dass** Teilbereiche des angeformten Kunststoffrahmens (10) an dem abgewinkelten Randbereich (8a) des Metallblechs 8 anliegen, insbesondere diesen umgreifen.

5. Hausgerät nach einem der vorigen Ansprüche, **dadurch gekennzeichnet, dass** Bereiche des Metallblechs (8) als integrale Befestigungselemente (26) zum Befestigen des Deckplattes (2) an einem Hausgeräte-Gehäuse (4) ausgebildet sind.

6. Hausgerät nach einem der vorigen Ansprüche, **dadurch gekennzeichnet, dass** das Metallblech (8) gewölbt ist.

7. Hausgerät nach einem der vorigen Ansprüche, **dadurch gekennzeichnet, dass** das Metallblech (8) im Bereich der Deckelfläche mit integralen Versteifungen (12) versehen ist.

8. Hausgerät nach einem der vorigen Ansprüche, **dadurch gekennzeichnet, dass** an dem Randbereich Eingriffselemente (14) vorgesehen sind, in die Bereiche des Kunststoffrahmens (10) formschlüssig eingreifen.

9. Hausgerät nach einem der vorigen Ansprüche, **dadurch gekennzeichnet, dass** der Kunststoffrahmen (10) Befestigungselemente (16) zum Befestigen der Deckplatte (2) an einem Hausgeräte-Gehäuse (4) aufweist.

10. Hausgerät nach einem der vorigen Ansprüche, **dadurch gekennzeichnet, dass** der Kunststoffrahmen (10) aus einem ABS-Kunststoff hergestellt ist.

11. Hausgerät nach einem der vorigen Ansprüche, **dadurch gekennzeichnet, dass** das Hausgerät ein Gehäuse (4) mit einem Gehäusebereich (4a) aufweist, an dem die Befestigungselemente (16; 26) der Deckplatte (2) fixierbar sind.
